## Europäisches Patentamt
## European Patent Office
## Office européen des brevets

(11) Veröffentlichungsnummer: **0 153 677**
**B1**

(12) # EUROPÄISCHE PATENTSCHRIFT

(45) Veröffentlichungstag der Patentschrift:
26.11.86

(51) Int. Cl.⁴: **B 60 K 15/04**

(21) Anmeldenummer: **85101704.6**

(22) Anmeldetag: **15.02.85**

(54) Selbstschliessender Kraftstoffbehälterverschluss.

(30) Priorität: **24.02.84 DE 3406788**

(43) Veröffentlichungstag der Anmeldung:
**04.09.85 Patentblatt 85/36**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**DE-A-2 930 153**
**DE-C-3 232 340**
**FR-A-778 869**
**FR-A-1 294 601**

(73) Patentinhaber: **Temmesfeld, Axel, Dipl.- Ing.,
Kranzhornweg 5, D-8201 Raubling (DE)**

(72) Erfinder: **Temmesfeld, Axel, Dipl.- Ing.,
Kranzhornweg 5, D-8201 Raubling (DE)**

(74) Vertreter: **Kehl, Günther, Dipl.- Phys.,
Patentanwälte GEYER, HAGEMANN & KEHL
Ismaninger Strasse 108 Postfach 86 03 29, D-8000
München 86 (DE)**

## Beschreibung

Die Erfindung betrifft einen selbstschließenden Kraftstoffbehälterverschluß der im Oberbegriff des patentanspruches 1 genannten Art.

Ein solcher Kraftstoffbehälterverschluß ist aus der deutschen patentschrift 32 32 340 bekannt. Der bekannte selbstschließende Kraftstoffbehälterverschluß kann nach Art eines Tankdeckels auf dem Einfüllstutzen eines Kraftfahrzeugs diebstahlsicher und unlösbar angebracht werden. Zur Befestigung dient ein Ansatzstück mit einem koaxialen zylindrischen Teil und einem sich radial erstreckenden Ringteil, das unter Zwischenschaltung einer Dichtung auf dem Rand der Mündung eines Einfüllstutzens aufliegt. Das Ansatzstück wird gegen die Dichtung und den Mündungsrand durch eine Feder gedrückt, die sich an ihrem anderen Ende an einem Ring abstützt, an dem zwei Fanghaken befestigt sind. Die beiden Fanghaken liegen ähnlich wie die Fanghaken eines Tankdeckels an den axialen Rampen des Kraftstoffeinfülistutzens an, wobei die Feder gespannt und das Ansatzstück fest auf die Dichtung und den Rand der Mündung des Einfülistutzens gepreßt wird. Des weiteren ist an dem koaxialen zylindrischen Teil des Ansatzstückes eine Dichtung vorgesehen, die eine axiale Verschiebung zwischen denn umgestülpten Rand des Ventilkörperführungsrohres und denn Ansatzstück zuläßt. Das Führungsrohr für den Ventilkörper und sein um gestülpter Rand können zu dem Ansatzstück verschiedene axiale Positionen einnehmen. Hierzu weist die Innenseite des unngestülpten Randes zwei umlaufende Stege auf, die als Anschlag für einen aus einer elastischen Klinke bestehenden Einrastmechanismus dienen. An dem Ansatzstück ist des weiteren ein Anschlag angeformt. Dieser Anschlag steht mit einem Mitnehmer an dem um gestülpten Rand des Rohrtelies in Eingriff, wenn sich das Führungsrohr in der vom Kraftstoffbehälter entfernten seiner beiden möglichen Axialpositionen befindet. Bei der Montage des Kraftstoffbehälterverschlusses kann durch Drehen an dem Rand des Ansatzstückes das Ansatzstück und mit ihm die Fanghaken gedreht werden, bis diese an den schrägen Rampen innerhalb des Einfüllstutzens auflaufen, wobei die Feder gespannt und das Ansatzstück fest gegen die Dichtung und den Mündungsrand gedrückt wird. Sobald ein sicherer Sitz erreicht ist, wird das Rohrteil mit seinem um gestülpten Rand in Richtung auf den Kraftstoffbehälter verschoben, so daß die Drehkupplung zwischen den beiden Teilen zerstört wird und der Kraftstoffbehälterverschluß gegen Demontage gesichert ist.

Mit dem bekannten Kraftstoffbehälterverschluß sind zufriedenstellende Resultate erzielbar, er weist jedoch zahlreiche Einzelteile auf und ist somit verhältnismäßig teuer herzustellen.

Aus der deutschen Offenlegungsschrift 29 30 153 ist ein Anpassungsring bekannt, mit dessen Hilfe ein Kraftstoffeinfülistutzen mit Außenkragen in einen solchen mit Innenkragen um gewandelt werden kann. Der bekannte Anpassungs- oder Zwischenring weist ein Richtgesperre auf, das eine Verdrehung des Ringes nur in der Befestigungsrichtung zuläßt und in der entgegengesetzten Richtung sperrt. Durch Ausklinken des Rastgesperres kann der bekannte Anpassungsring jederzeit von dem Kraftstoffeinfüllstutzen entfernt werden, es sei denn, es werden zusätzliche Mittel vorgesehen, um eine diebstahlsichere Befestigung zu erreichen. Der bekannte Ring kann seiner Zweckbestimmung entsprechend nur auf Kraftstoffeinfülistutzen mit Außenkragen montiert werden und kann nicht als Kraftstoffbehälterverschluß (allenfalls zur Aufnahme eines solchen) dienen.

Der Erfindung liegt die Aufgabe zugrunde, einen Kraftstoffbehälterverschluß der eingangs genannten Art zu schaffen, der in einfacher Weise auf dem Einfüllstutzen eines Kraftfahrzeuges montierbar und gegen Demontage gesichert ist und der sich insbesondere dadurch auszeichnet, daß er aus wenigen, leicht serienmäßig fertigbaren Einzelteilen besteht.

Die Lösung dieser Aufgabe ist im kennzeichnenden Teil des Patentanspruches 1 angegeben. Mit der erfindungsgemäßen Lösung kann bei jedem Kraftstoffeinfüllstutzen, der einen Innenbayonettkragen aufweist, der Kraftstoffbehälterverschluß in einfacher Weise unlösbar befestigt werden. Hierzu wird der Kraftstoffbehälterverschluß wie ein Tankdeckel auf den Einfüllstutzen gesetzt und festgedreht. Das erfindungsgemäß vorgesehene Richtgesperre schlägt dabei an den Kanten der Ausnehmungen des Kraftstoffeinfülistutzens in tangentialer Richtung an, so daß nur eine Drehung in Befestigungsrichtung, jedoch nicht in der entgegengesetzten Richtung möglich ist, und der Kraftstoffbehälterverschluß nach dem Festdrehen auf dem Einfüllstutzen sitzt. Die Befestigung ist einfach und dennoch sicher und es sind - wie ohne weiteres ersichtlich - nur wenige Teile erforderlich.

Nach einer besonders vorteilhaften Ausführungsform besteht das Richtgesperre aus einer an der Außenfläche des Kraftstoffbehälterverschlusses angeordneten Sperrzahnung und einer sich mit einer elastischen Sperrklinke an der Sperrzahnung abstützenden Spange, wobei die Spange mindestens einen an den Kanten der Ausnehmungen anschlagenden Radialvorsprung aufweist.

Besonders vorteilhaft ist, wenn die Sperrzahnung am Grund einer um laufenden Nut angebracht ist, da die auf der Sperrzahnung sitzende Federspange in diesem Fall besonders sicher durch die Nut geführt ist.

Nach einer besonders vorteilhaften Ausgestaltung der Erfindung weist die Federspange in der Draufsicht die Umrißform eines Kreissegmentes mit einem Zentrumswinkel von etwas mehr als 180° auf. Eine solche Federspange kann in einfacher Weise über die Sperrzahnung geschoben werden, wobei sich die beiden freien Schenkel des Kreissegmentes etwas auseinanderbiegen und - bedingt durch ihre Elastizität - zurückschnappen, wenn die Durchmesserlinie der Sperrzahnung überschritten ist. Um einen sicheren Halt der Federspange sicherzustellen, ist ein Zentrumswinkel von etwas mehr als 180 erforderilch. Die Größe des Zentrumswinkels wird in Anpassung an die Elastizität der Federspange gewählt.

In fertigungstechnischer Hinsicht hat es sich als besonders vorteilhaft erwiesen, wenn die Federspange aus einem zylindrischen, auf der Sperrzahnung aufliegenden Teil und einem radial nach außen weisenden Steg besteht. Dabei kann der zylindrische Teil längs einer Mittellinie unterbrochen werden und zur Bildung der Sperrklinke und des Radialvorsprungs aufgebogen sein.

Besonders vorteilhaft ist des weiteren, wenn der Kraftstoffbehälterverschluß aus zwei über ein Gewinde verbundenen Rohrteil gefertigt ist, wobei das erste Rohrteil einstückig mit den Anschlägen und das zweite Rohrteil einstückig mit dem auf dem Rand der Mündung aufliegenden Randbereich verbunden ist. Diese Bauweise gestattet eine besonders stabile Befestigung, da durch Drehen des zweiten Rohrteiles das erste Rohrteil in Richtung auf die Mündung des Kraftstoffeinfüllstutzens gezogen und gegen die axiale Rampe im Innern des Kraftstoffeinfüllstutzens mit seinen Anschlägen gepreßt wird. Da die Steigung des Gewindes kleiner als die Steigung der axialen Rampe ist, ist eine besonders stabile Befestigung möglich.

Als Ventilkörper kann sowohl ein koaxial geführter stromlinienförmiger Körper verwendet werden als auch eine seitlich verschwenkbare Klappe.

Nach einer besonders erfinderischen Weiterentwicklung ist vorgesehen, daß die Schließfeder als Druckfeder ausgebildet ist, deren erster Kraftangriffspunkt im Bereich unterhalb des Drehpunktes der verschwenkbaren Klappe und deren zweiter Kraftangriffspunkt an der Unterseite der Klappe liegt. Dadurch daß die als Druckfeder ausgebildete Schließfeder an der einen Seite unterhalb des Drehpunktes der verschwenkbaren Klappe am Kraftstoffeinfüllstutzen und an der anderen Seite an der Unterseite der Klappe angreift, ist sichergestellt, daß sie im wesentlichen parallel zur Längsrichtung des Kraftstoffeinfüllstutzens angeordnet ist und zum überwiegenden Teil die Schließkraft koaxial auf die schwenkbare Klappe ausgeübt wird. Da die schwenkbare Klappe aus fertigungstechnischen Gründen vorzugsweise in einem Langloch angelenkt wird, wird hierdurch ein Spielausgleich der Dichtung erreicht, d. h. die Klappe wird mit ihrer Dichtung ringsum gleichmäßig gegen den Ventilsitz gedrückt. Würde in Schließstellung der schwenkbaren Klappe eine nennenswerte horizontale Kraftkomponente auf diese wirken, beispielseweise, wenn die Feder horizontal angeordnet wäre, so würde sich diese positive Wirkung nicht einstellen. Durch die besondere Wahl der Feder als Druckfeder und die Geometrie ihrer Aufhängung ist sichergestellt, daß der Kraftarm der Feder im letzten Abschnitt der Öffnungsbgwegung der Klappe sich verkürzt und folglich die in dieser Phase der Öffnung aufzuwendende Kraft klein ist. Dagegen wird die Klappe mit großer Kraft gegen den Ventilsitz im geschlossenen Zustand gedrückt, obwohl in dieser Stellung der Klappe die Feder weniger als im geöffneten Zustand komprimiert ist.

Eine weitere besonders vorteilhafte Ausführungsform zeichnet sich dadurch aus, daß die Schließfeder als Schraubenfeder ausgebildet ist und daß sie eine in einer Buchse geführte Führungsstange umschließt. Die Buchse und die Führungsstange sind dabei in den Kraftangriffspunkten angelenkt. Sie sorgen für eine sichere Führung der Feder.

Nach einer weiteren besonders vorteilhaften Ausführungsform ist vorgesehen, daß die Innenwandung des Kraftstoffbehälterverschlusses im Bereich zwischen dem äußeren Ende und dem Ventilsitz einen sich in Richtung auf den Ventilsitz konisch verjüngenden Abschnitt aufweist, der unmittelbar an den Ventilsitz anschließt. Durch diese bauliche Maßnahme wird verhindert, daß sich Regenwasser oder Kraftstoffreste vor dem Ventilsitz ansammel. Da die Kraftstoffeinfüllstutzen eines Kraftfahrzeuges meistens horizontal oder höchstens um einen kleinen Winkel gegen die Horizontale geneigt angeordnet sind, fließt Flüssigkeit, die sich am Ende des Kraftstoffeinfüllstutzens vor der Verschlußkappe ansammelt, nach außen ab. Ein Neigungswinkel zwischen 40° und 80°, vorzugsweise zwischen 50° und 70° stellt sicher, daß auch bei geneigtem Einfüllstutzen die Ansammlung von Flüssigkeit vor der Verschlußkappe vermieden wird.

Die Erfindung wird im folgenden anhand der in den Figuren schematisch dargestellten Ausführungsbeispiele näher erläutert. Es zeigt:

Figur 1: eine Seitenansicht - zur Hälfte im Axialschnitt - eines Kraftstoffbehälterverschlusses gemäß der Erfindung

Figur 2: eine Draufsicht des in Figur 1 dargestellten Verschlusses

Figur 3: einen axialen Längsschnitt einer weiteren Ausführungsform eines Kraftstoffbehälterverschlusses gemäß der Erfindung

Figur 4: eine Draufsicht des in Figur 3 dargestellten Verschlusses

Figur 5: eine als Drehsicherung wirkende Federspange im Aufriß

Figur 6: die in Figur 5 dargestellte Federspange in der Draufsicht.

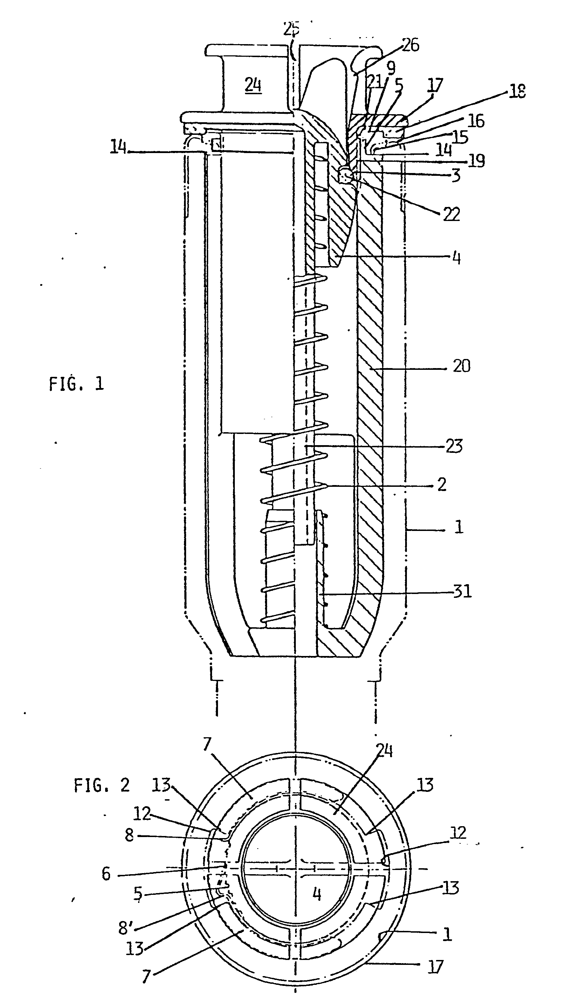

In Figur 1 ist strichpunktiert gezeichnet der Kraftstoffeinfüllstutzen 1 eines Fahrzeuges zu erkennen. Der rohrförmige Kraftstoffeinfüllstutzen 1 ist in seinem Mündungsbereich unter Freilassung eines Ringraumes nach innen umgestülpt. In dem umgestülpten Bereich sind zwei lokale Ausnehmungen 12 vorgesehen, die üblicherweise zur Aufnahme der Fanghaken eines Tankdeckels bestimmt sind. Die umgestülpten Bereiche bilden im Inneren des Kraftstoffeinfüllstutzens axiale Rampen 15, auf die überlicherweise die Fanghaken eines Tankdeckels auflaufen, so daß dieser meist unter Zwischenschaltung einer Dichtung auf den Rand der Mündung des Kraftstoffeinfüllstutzens gepreßt wird. In ähnlicher Weise ist der selbstschließende Kraftstoffbehälterverschlun gemäß der Erfindung in dem Einfüllstutzen angeordnet. Er weist ein Rohrteil 21 mit einem Flansch 17 auf. Über das Rohrteil 21 ist ein zweites Rohrteil 20 geschraubt, das an seinem dem Kraftstoffbehälter zugewandten Ende mit seitlichen Durchbrüchen versehen ist und dort praktisch nur noch aus zwei Längsstegen besteht. In dem ersten Rohrteil 20 befindet sich ein etwa eiförmiger Ventilkörper 4, der in einer umlaufenden Nut eine Dichtung 22 aufweist. Der Ventilkörper 4 schlägt mit seiner Dichtung 22 an dem Rohrteil 21, das an dieser Stelle etwas abgeschrägt ist, an. Der Ventilkörper ist mit Hilfe einer Stange 23 und einer Führungsbuchse 31 in dem Rohrteil 20 koaxial geführt und kann mit Hilfe einer Zapfpistole unter Zusammenpressen der Feder 2 bis in den Bereich der Buchse 31 geschoben werden, so daß über die seitlichen Öffnungen des Rohrteiles 20 der aus der Zapfpistole austretende Kraftstoff in den Kraftstofftank des Fahrzeuges eingefüllt werden kann. Zum Schutz des Verschlußkörpers 4 ist ein Ansatzstutzen 24 vorgesehen, der längs seiner Mantellinie verlaufende Einschnitte 25 aufweist, über die Spritzwasser oder eventuell auch Kraftstoff abfließen kann. Der Ansatzstutzen 24 weist an seiner Innenfläche eine Hinterschneidung 26 auf, an der die Zapfpistole, die üblicherweise entsprechende Vorsprünge aufweist, eingehängt werden kann. Der selbstschließende Kraftstoffbehälterverschluß weist zwei sich radial nach außen erstreckende Anschläge 14 auf, die so dimensioniert sind, daß sie durch die Ausnehmungen 12 des Kraftstoffeinfüllstutzens eingeführt werden können, jedoch beim Verdrehen des Kraftstoffbehälterverschlusses um seine Längsachse an den Rampen 15 wie die Fanghaken eines Tankdeckels auflaufen. Der selbstschließende Kraftstoffbehälterverschluß wird in dem Einfüllstutzen 1 dadurch dicht und fest gehalten, daß der Mündungsbereich des Einfüllstutzens zwischen dem Flansch 17 und den Anschlägen 14 unter Zwischenschaltung einer elastischen Dichtung 18 eingespannt ist.

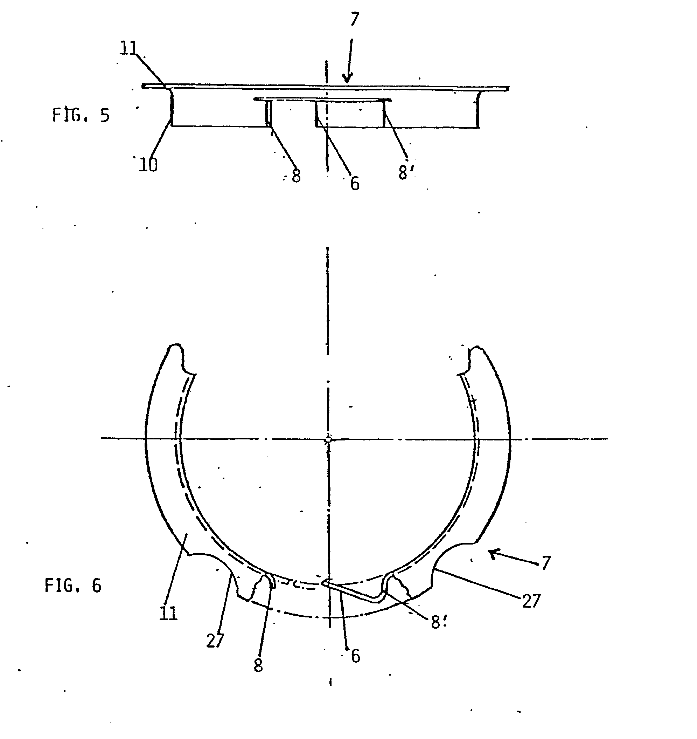

Erfindungsgemäß weist der Kraftstoffbehälterverschluß eine umlaufende Sperrzahnung 5 auf. Diese befindet sich am Grund einer umlaufenden Nut 9 im Bereich der Mündung. Über dieser Sperrzahnung 5 in der Nut 9 sitzt eine als Drehsicherung wirkende Federspange 7, die im Detail in den Figuren 5 und 6 dargestellt ist. Die Federspange 7 weist in der Draufsicht (siehe Figur 2 und Figur 6) etwa die Umrißform eines Kreissegmentes mit einem Zentrumswinkel von etwas mehr als 180° auf. Die Federspange besteht aus einem zylindrischen Teil 10 und einem sich von diesem radial nach außen erstreckenden Steg 11. In diesem sind Aussparungen 27 angebracht, die das Auseinanderbiegen der beiden freien Enden der Spange erleichtern. Etwa in der Mitte der Federspange ist der zylindrische Teil 10 längs einer Mantellinie und parallel zu dem Steg 11 geschlitzt, so daß sich zwei freie Zungen ergeben. Diese sind zu einer Sperrnase 6 mit Anschlag 8' bzw. zu einem Anschlag 8 aufgebogen. Wenn die Federspange 7 in der Nut 9 des Kraftstoffbehälterverschlusses sitzt, so liegt die Sperrnase 6 federnd an der Sperrzahnung 5 an, so daß die beiden genannten Teile nur in einer Richtung gegeneinander verdreht werden können, während die Drehbewegung in der entgegengesetzten Richtung durch die Wirkung der Sperrnase 6 blockiert ist.

Wie insbesondere in Figur 2 zu erkennen ist, schlagen die Vorsprünge 8 und 8' der Federspange 7 an den axialen Kanten 13 der Ausnehmung 12 des Einfüllstutzens 1 an.

Der Kraftstoffbehälterverschluß gemäß der Erfindung wird wie folgt montiert:

Vor dem Einsetzen werden zweckmäßigerweise die Rohrteile 20 und 21 etwas auseinandergeschraubt. Danach wird der Kraftstoffbehälterverschluß in den Einfüllstutzen eingeführt, wobei die beiden Anschläge 14 durch die Ausnehmungen 12 im Bereich des Mündungsrandes eingeführt werden. Ebenso liegen die Anschläge 8 und 8' der Federspange 7 im Bereich einer Ausnehmung 12 des Mündungsrandes. Sobald der Flansch 17 mit seiner Dichtung 18 auf dem Rand der Mündung des Einfüllstutzens 1 lose aufliegt, wird der Kraftstoffbehälterverschluß im Uhrzeigersinn gedreht. Da jedoch die Federspange 7 mit ihrem Vorsprung 8 an der Kante 13 der Ausnehmung 12 anschlagt, macht die Federspange 7 diese Drehung nicht mit, sondern wird ortsfest gehalten. Die Sperrnase 6 der Federspange 7 gleitet über die Zähne der Sperrzahnung 5. Bei dieser Drehung bewegen sich die Anschläge 14 aus dem Bereich der Ausnehmung 12 heraus und laufen an den durch den umgestülpten Rand des Einfüllstutzens 1 gebildeten axialen Rampen 15 im Inneren des Einfüllstutzens ähnlich wie die Fanghaken eines Tankdeckels auf. Wenn der Endpunkt dieser Drehbewegung erreicht ist, wird eventuell, jedoch nicht notwendigerweise, das Rohrteil 21 mit seinem Ansatzstutzen 24 weiter im Uhrzeigersinn gedreht, so daß das sich jetzt nicht mehr mitdrehende Rohrteil 20 noch fester gegen die axialen Rampen gezogen und der Flansch 17 gegen die elastische Dichtung 18 gepreßt und diese weiterverformt wird. Damit ist die Montage beendet. Eine Demontage ist nicht mehr, genauer gesagt, nur unter vollständiger Zerstörung möglich, da die Sperrnase 6 der Federspange 7 an den Zähnen der Sperrzahnung 5 anliegt und eine entgegengesetzte Drehung der Sperrzahnung verhindert.

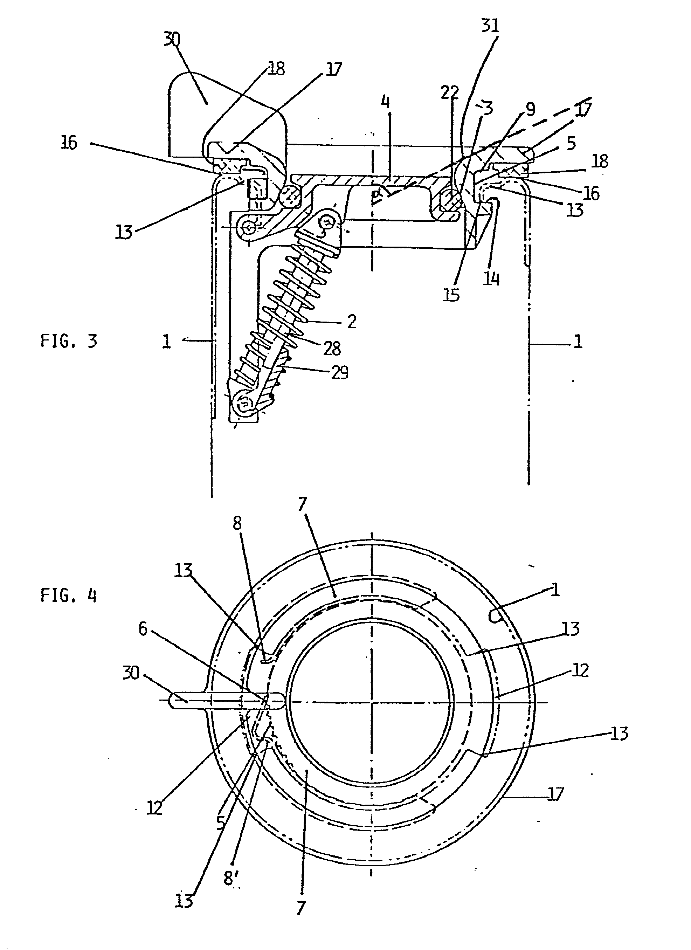

Die Figuren 3 und 4 zeigen ein weiteres Ausführungsbeispiel eines selbstschließenden Kraftstoffbehälterverschlusses gemäß der Erfindung. Das in den Figuren 3 und 4 dargestellte Ausführungsbeispiel unterscheidet sich von demjenigen der Figur 1 im wesentlichen dadurch, daß anstelle des axial geführten einförmigen Ventilkörpers eine seitlich verschwenkbare Klappe 4 eingesetzt ist. Die Klappe 4 wird ebenfalls durch eine Schließfeder 2 gegen den Ventilsitz 3 gepreßt, wobei zur Herstellung einer dichten Verbindung eine Dichtung 22 dient. Bei der Feder 2 handelt es sich ebenfalls um eine Druckfeder. Diese greift einerseits etwas innerhalb des Gelenks für die Klappe 4 und andererseits am Rand des Kraftstoffbehälterverschlusses unterhalb des Gelenks für die Klappe 4 an. Zur Führung der Feder dient eine Stange 28 und eine Buchse 29. Die Buchse 29 und die Stange 28 sind mit ihren Enden jeweils an den Kraftangriffspunkten über Gelenke gelagert. Da bei dieser Anordnungsweise der Feder 2 deren Kraftarm im letzten Abschnitt der Öffnungsbewegung der Klappe 4 sich verkürzt, ist die in dieser phase der Öffnung aufzuwendende Kraft gering, während dafür gesorgt ist, daß die Klappe 4 mit großer Kraft in ihren Ventilsitz gedrückt wird. Die Funktion der Anschläge 14, der Federspange 7 und der Sperrzahnung 5 ist dieselbe wie anhand des Ausführungsbeispiels der Figuren 1 und 2 erläutert, so daß eine erneute Beschreibung sich erübrigt. Es sei lediglich erwähnt, daß der Kraftstoffbehälterverschluß gemäß Figur 3 nicht aus zwei ineinander verschraubbaren rohrförmigen Teilen besteht. Anders als beim Ausführungsbeispiel der Figur 1 wird folglich die Anlagekraft des Flansches 17 auf der Dichtung 18 und dem Mündungsrand 16 ausschließlich durch das Auflaufen der Anschläge 14 auf den axialen Rampen 15 im Inneren des Einfüllstutzens erzeugt. Es hat sich gezeigt, daß diese Kraft ausleichend für einen sicheren Sitz des Verschlusses ist. Schließlich sei erwähnt, daß ein Flügel 30 zum Festdrehen des Behälterverschlusses dient.

Wie in Figur 3 zu erkennen, ist die Innenwand des Kraftstoffbehälterverschlusses zum freien Ende hin konisch, so daß bei horizontal liegendem Einfüllstutzen oder auch bei leicht geneigtem Einfüllstutzen Flüssigkeit, die sich vor der Verschlußklappe 4 angesammelt hat, abfließen kann. Ein Öffnungswinkel α von ca. 65° hat sich für den konischen Abschnitt 31 als besonders vorteilhaft erwiesen.

**Patentansprüche**

1. Selbstschließender Kraftstoffbehälter verschluß zur unlösbaren Befestigung in einem Kraftstoffeinfüllstutzen (1), mit einem durch eine Schließfeder (2) in Richtung auf einen Ventilsitz (3) vorgespannten Ventilkörper (4), der durch Einführen einer Zapfpistole gegen die Kraft der Schließfeder (2) aus denn Ventilsitz (3) entfernbar ist, und mit mindestens einem radial vorstehenden Anschlag (14) versehen ist, wobei der Anschlag (14) in Ausnehmungen (12) im Mundungsrand (16) des Kraftstoffeinfüllstutzens einführbar ist und bei Drehung des Kraftstoffbehälterverschlusses im Uhrzeigersinn an axialen Rampen (15) im Innern des Kraftstoffeinfüllstutzens aufläuft, wodurch ein den Mündungsrand (16) überdeckender Flansch (17) fest gegen den Mündungsrand (17) gepreßt wird, dadurch gekennzeichnet, daß an der Außenseite des Kraftstoffbehälterverschlusses ein als Drehsicherung wirkendes Richtgesperre (5, 7) angeordnet ist, das sich über mindestens einen radialen Vorsprung (8, 8') an den Kanten der Ausnehmungen (12) des Kraftstoffeinfüllstutzens in tangentialer Richtung abstützt und die Verdrehung des Kraftstoffbehälterverschlusses nur im Uhrzeigersinn zuläßt und im entgegengesetzten Drehsinn sperrt.

2. Kraftstoffbehälterverschluß nach Anspruch 1, dadurch gekennzeichnet, daß das Richtgesperre aus einer an der Außenfläche des Kraftstoffbehälterverschlusses angeordneten Sperrzahnung (5) und einer sich mit einer elastischen Sperrklinke (6) an der Sperrzahnung abstützenden Spange (7) besteht, und daß die Spange (7) mindestens einen an den Kanten der Ausnehmungen (12) anschlagenden radialen Vorsprung (8, 8') aufweist.

3. Kraftstoffbehälterverschluß nach Anspruch 2, dadurch gekennzeichnet, daß die Sperrzahnung (5) am Grund einer um laufenden Nut (9) angebracht ist.

4. Kraftstoffbehälterverschluß nach Anspruch 2 oder 3, dadurch gekennzeichnet, daß die Spange (7) in der Draufsicht die Umrißform eines Kreissegmentes mit einem Zentrumswinkel von etwas mehr als 180° aufweist.

5. Kraftstoffbehälterverschluß nach Anspruch 4, dadurch gekennzeichnet, daß die Spange (7) aus einem zylindrischen auf der Sperrzahnung (5) aufliegenden Teil (10) und einem radial nach außen weisenden Steg (11) besteht, und daß der zylindrische Teil (10) längs einer Mantellinie unterbrochen und zur Bildung der Sperrnase (6) und zur Bildung des radialen Vorsprunges (8, 8') aufgebogen ist.

6. Krafstoffbehälterverschluß nach einem der Ansprüche 1 bis 5, dadurch gekennzeichnet, daß zwischem dem Mündungsrand (16) des Kraftstoffeinfüllstutzens (1) und dem diesen überdeckenden Flansch (17) eine elastische Dichtung (18) angeordnet ist.

7. Kraftstoffbehälterverschluß nach einem der Ansprüche 1 bis 6, dadurch gekennzeichnet, daß er zwei über ein Gewinde (19) verbundene Rohrteile (20, 21) aufweist, wobei das erste Rohrteil (20) einstückig oder kraftschlüssig mit den Anschlägen (14) verbunden ist und das zweite Rohrteil (21) einstückig oder kraftschlüssig mit dem Flansch (17) verbunden ist.

8. Kraftstoffbehälterverschluß nach einem der Ansprüche 1 bis 7, dadurch gekennzeichnet, daß der Ventlikörper (4) stromlinienförmig ist und in einem sich in Richtung des einzufüllenden Kraftstoffes erweiternden Führungsrohr (Rohrteil 20) axial geführt ist.

9. Kraftstoffbehälterverschluß nach einem der Ansprüche 1 bis 8, dadurch gekennzeichnet, daß der Ventilkörper (4) eine seitlich verschwenkbare Klappe ist.

10. Kraftstoffbehälterverschluß nach einem der Ansprüche 1 bis 9, dadurch gekennzeichnet, daß die Schließfeder (2) als Druckfeder ausgebildet ist, deren erster Kraftangriffspunkt im Bereich unterhalb des Drehpunktes der verschwenkbaren Klappe (4) und deren zweiter Kraftangriffspunkt an der Unterseite der Klappe (4) liegt.

11. Kraftstoffbehälterverschluß nach Anspruch 10, dadurch gekennzeichnet, daß die Schließfeder (2) als Schraubenfeder ausgebildet ist, und daß sie eine in einer Buchse (29) geführte Führungsstange (28) umgibt.

12. Kraftstoffbehälterverschluß nach Anspruch 10 oder 11, dadurch gekennzeichnet, daß seine Innenwandung im Bereich zwischen seinem äußeren Ende und dem Ventilsitz (3) einen sich in Richtung auf den Ventilsitz (3) konisch verjüngenden Abschnitt (31) aufweist, der unmittelbar an den Ventilsitz (3) anschließt.

13. Kraftstoffbehälterverschluß nach Anspruch 12, dadurch gekennzeichnet, daß der Winkel (α) zwischen der Längsachse des Kraftstoffbehälterverschlusses und einer Mantellinie des sich konisch verjüngenden Abschnittes (31) zwischen 40° und 80°, vorzugsweise zwischen 50° und 70° liegt.

## Claims

1. Automatic fuel tank closing device for undetachable fixing in a fuel filling connection (1), with a valve body (4) biased by a locking spring (2) in the direction of a valve seat (3) and which can be removed from the latter by the introduction of a filling gun counter to the tension of the locking spring (2), and with at least one radially projecting stop (14), the latter being introducible into recesses (12) in the opening edge (16) of the fuel filling connection and on rotating the fuel tank closing device in the clockwise direction runs up on to axial ramps (15) within the fuel filling connection, so that a flange (17) covering the opening edge (16) is pressed firmly against said opening edge (16), characterized in that a locking mechanism (5, 7) acting as a rotation prevention means is provided on the outside of the fuel tank closing device and which is supported tangentially by means of at least one radial projection (8, 8,) on the edges of the recesses (12) of the fuel filling connection and only permits the rotation of the fuel tank closing device in the clockwise direction and prevents it in the opposite rotation direction.

2. Fuel tank closing device according to claim 1, characterized in that the locking mechanism comprises a locking tooth system (5) arranged on the outer face of the fuel tank closing device and a clasp (7) supported by an elastic catch (6) on the locking tooth system and in that the clasp (7) has at least one radial projection (8,8') abutting against the edges of recesses (12).

3. Fuel tank closing device according to claim 2, characterized in that the locking tooth system (5) is fitted at the bottom of an all-round slot (9).

4. Fuel tank closing device according to claims 2 or 3, characterized in that in plan view the clasp (7) has the outer contour of a circular segment with a centre angle of somewhat more than 180°.

5. Fuel tank closing device according to claim 4, characterized in that the clasp (7) comprises a cylindrical part (10) resting on the locking tooth system (5) and a radially outwardly pointing web (11) and in that the cylindrical part (10) is interrupted along a circumferential line and is bent up for forming the catch (6) and the radial projection (8, 8').

6. Fuel tank closing device according to one of the claims 1 to 5, characterized in that an elastic seal (18) is provided between the opening edge (16) of the fuel filling connection (1) and the flange (17) covering the latter.

7. Fuel tank closing device according to one of the claims 1 to 6, characterized in that it has two pipe parts (20, 21) connected by means of a thread (19), the first pipe part (20) being connected in one piece or non-positively to stops (14) and the second pipe part (21) is connected in one piece or non-positively to flange (17).

8. Fuel tank closing device according to one of the claims 1 to 7, characterized in that the valve body (4) is streamlined and is axially guided in a guide pipe (pipe part 20) widened in the direction of the fuel to be introduced.

9. Fuel tank closing device according to one of the claims 1 to 8, characterized in that the valve body (4) is a laterally pivotable flap.

10. Fuel tank closing device according to one of the claims 1 to 9, characterized in that the locking spring (2) is constructed as a compression spring, whose first force application point is located in the region below the pivot point of the pivotable flap (4) and whose second force application point is located on the underside of flap (4).

11. Fuel tank closing device according to claim 10, characterized in that the locking spring (2) is constructed as a helical spring and that it surrounds a guide rod (28) guided in a bush (29).

12. Fuel tank closing device according to claims 10 or 11, characterized in that in the area between its outer end and the valve seat (3), its inner wall has a portion (31) tapering conically in the direction of valve seat (3) and which is directly connected to the latter.

13. Fuel tank closing device according to claim 12, characterized in that the angle (α) between the longitudinal axis of the fuel tank closing device and a circumferential line of the conically tapering portion (31) is between 40° and 80°, preferably between 50° and 70°.

**Revendications**

1. Fermeture automatique de réservoir de carburant, pour fixation indesserrable dans une tubulure de remplissage de carburant (1) comportant un corps de soupape (4) soumis à une précontrainte par un ressort de fermeture (2) dans le sens d'un siège de soupape (3) que l'on peut retirer du siège de soupape (3) par l'introduction d'un pistolet distributeur contre la force du ressort de fermeture (2) et qui est pourvu d'au moins une butée radiale (14), de telle sorte que la butée (14) soit introduite dans l'évidement (12) du bord de l'ouverture (16) de la tubulure de remplissage de carburant et, lors d'une rotation de la fermeture du réservoir de carburant dans le sens des aiguilles d'une montre, se déplace sur des rampes axiales (15) à l'intérieur de la tubulure de remplissage, afin que l'une des brides (17) recouvrant le bord de l'ouverture soit fermement comprimée contre le rebord de l'ouverture (16), caractérisée en ce qu'il est monté sur le côté extérieur de la fermeture du réservoir de carburant un encliquetage directionnel (5, 7) qui, par au moins une saillie radiale (8, 8'), s'appuie sur le bord des évidements (12) de la tubulure de remplissage dans le sens tangentiel et que la rotation de la fermeture du réservoir de remplissage n'est possible que dans le sens des aiguilles d'une montre et est bloquée dans le sens de rotation inverse.

2. Fermeture de réservoir de carburant selon revendication 1, caractérisée en ce que l'encliquetage directionnel est composé d'une denture de verrouillage (5) disposée sur la surface extérieure de la fermeture du réservoir de carburant et d'une boucle (7) venant porter sur la denture de verrouillage par un cliquet d'arrêt élastique (6) et que la boucle (7) comprend, au minimum, une saillie radiale (8, 8,) venant en butée sur les bords des évidements (12).

3. Fermeture de réservoir de carburant selon revendication 2, caractérisée en ce que la denture de verrouillage (5) est disposée au fond d'une rainure périphérique (9).

4. Fermeture de réservoir de carburant selon revendication 2 ou 3 caractérisé en ce que la bouche (7) présente, en vue de dessus, le profil d'un segment de cercle dont l'angle au centre est quelque peu supérieur à 180°.

5. Fermeture de réservoir de carburant selon revendication 4 caractérisée en ce que la boucle (7) est composée d'une partie cylindrique (10) venant porter sur la denture de verrouillage et une bride (11) dirigée radialement vers l'extérieur et que la partie cylindrique (10) est interrompue le long d'une génératrice et est cintrée en vue de la formation du nez de verrouillage (6) et de la formation des saillies radiales (8, 8,).

6. Fermeture de réservoir de carburant selon l'une quelconque des revendications 1 à 5, caractérisée en ce qu'entre le bord de l'ouverture (16) de la tubulure de remplissage de carburant (1) et cette bride de recouvrement (17) il est prévu un joint élastique (18).

7. Fermeture de réservoir de carburant selon l'une quelconque des revendications 1 à 6, caractérisée en ce qu'elle comprend deux éléments tubulaires (20 21), reliés mutuellement par un filetage (19), de telle sorte que le premier élément tubulaire (20) soit d'une seule pièce ou relié aux butées (14) par adhérence et que le second élément tubulaire (21) est d'une seule pièce ou relié par adhérence à la bride (17).

8. Fermeture de réservoir de carburant selon l'une quelconque des revendications 1 à 7, caractérisée en ce que le corps de soupape (4) est profilé et guidé axialement dans un tuyau de guidage (élément tubulaire 20) prolongé dans le sens du carburant à remplir.

9. Fermeture de réservoir à carburant selon l'une quelconque des revendications 1 à 8 caractérisée en ce que le corps de soupape (4) est un clapet rabattable latéralement.

10. Fermeture de réservoir de carburant selon l'une quelconque des revendications 1 à 9, caractérisée en ce que le ressort de fermeture (2) est conformé comme un ressort de compression, dont le premier point d'application de force se trouve dans la zone située au dessous du point de rotation du clapet rabattable (4) et le second point d'application de la force est situé sur la face inférieure du clapet (4).

11. Fermeture de réservoir de carburant selon revendication 10, caractérisé en que que le ressort de fermeture (2) est conformé comme un ressort hélicoïdal et qu'il entoure une tige de guidage (28) guidée dans une bague (29).

12. Fermeture de réservoir de carburant selon revendication 10 ou 11, caractérisée en ce que sa paroi intérieure, dans la zone comprise entre son extrémité extérieure et le siège de soupape (3) présente une section s'amincissant en forme de cône (31) dans la direction du siège de soupape (3), se raccordant directement à celui-ci.

13. Fermeture de réservoir de carburant selon revendication 12, caractérisé en ce que l'angle (α) entre l'axe longitudinal de la fermeture du réservoir de carburant et une génératrice de la section (31) s'amincissant en forme de cône est compris entre 40 et 80° et, de préférence entre 50 et 70°.

FIG. 1

FIG. 2

FIG. 3

FIG. 4

FIG. 5

FIG. 6